# EUROPÄISCHE PATENTANMELDUNG

(11) **EP 1 306 676 A2**
(43) Veröffentlichungstag der Anmeldung: **02.05.2003**
(21) Anmeldenummer: 02022470.5
(22) Anmeldetag: 04.10.2002
(51) Int. Cl.: G01P 3/481

(54) **Umdrehungszähler zum Ermitteln einer Umdrehungszahl eines um eine Drehachse drehbaren Drehelements**

(30) Priorität: 17.10.2001 DE 10151234
(71) Anmelder: SIEMENS AKTIENGESELLSCHAFT, 80333 München (DE)
(72) Erfinder: Siess, Rainer, 91054 Erlangen (DE); Wetzel, Ulrich, 07980 Berga (DE)

(57) **Zusammenfassung**

Ein einziger Sensor (4) tastet ein Drehelement (1) ab. In jeder Drehstellung des Drehelements (1) ist dabei anhand des Rohsignals (S) des Sensors (4) eindeutig eine von mindestens drei Winkelbereichsgruppen (I, II, III) ermittelbar. Zwei Winkelbereichsgruppen (I, III) weisen je einen einzigen zusammenhängenden Winkelbereich (I, III) auf, die anderen Winkelbereichsgruppen (II) je zwei in sich zusammenhängende, voneinander getrennte Winkelbereiche (IIa, IIb). Von einem Energieerzeugungssystem (6) werden bei einer Drehbewegung unterhalb einer Minimaldrehzahl zwangsweise Energiepulse abgegeben, so dass jeweils mindestens ein Rohsignal (S) erfassbar und die korrespondierende Winkelbereichsgruppe (I, II, III) ermittelbar ist. Das Energieerzeugungssystem (6) und das Drehelement (1) sind derart miteinander gekoppelt, dass für mindestens einen Teil der so ermittelten Winkelbereichsgruppen (I, II, III) der Winkelbereich (I, IIa, IIb, III) ermittelbar ist und anhand der ermittelbaren Winkelbereiche (I, IIa, IIb, III) die Umdrehungszahl ermittelbar ist.

## Beschreibung

Die vorliegende Erfindung betrifft einen Umdrehungszähler zum Ermitteln einer Umdrehungszahl eines um eine Drehachse drehbaren Drehelements, mit einer Sensoranordnung und einem Energieerzeugungssystem,
- wobei das Energieerzeugungssystem derart ausgebildet ist, dass bei einer Drehbewegung unterhalb einer Minimaldrehzahl von ihm zwangsweise Energiepulse an die Sensoranordnung abgegeben werden,
- wobei bei Abgabe der Energiepulse von der Sensoranordnung jeweils mindestens ein Rohsignal erfassbar ist,
- wobei das Energieerzeugungssystem und das Drehelement derart miteinander gekoppelt sind, dass für mindestens einen Teil der bei Abgabe der Energiepulse erfassten Rohsignale ermittelbar ist, um welchen Winkelbereich das Drehelement verdreht ist, und anhand der ermittelbaren Winkelbereiche die Umdrehungszahl ermittelbar ist.

Ein derartiger Umdrehungszähler ist z. B. aus der EP 0 658 745 B1 bekannt. Auch die DE 44 07 474 C2 zeigt einen derartigen Umdrehungszähler.

Aus der DE 32 47 174 A1 ist ein Umdrehungszähler zum Ermitteln einer Umdrehungszahl eines um eine Drehachse drehbaren Drehelements bekannt, der eine Sensoranordnung mit einem einzigen das Drehelement abtastenden Sensor und einer dem Sensor nachgeordneten Auswerteschaltung aufweist. In jeder Drehstellung des Drehelements ist anhand eines Rohsignals des Sensors eindeutig eine von drei Winkelbereichsgruppen ermittelbar. Jede Winkelbereichsgruppe weist dabei eine Vielzahl von in sich zusammenhängenden, voneinander getrennten Winkelbereichen auf. Die Sensoranordnung wird kontinuierlich mit Energie versorgt. Die Auswerteschaltung ermittelt anhand der kontinuierlich erfassten Rohsignale die Umdrehungszahl.

Aus der DE 26 39 047 A1 ist ein Drehzahlmesser zum Ermitteln einer Drehzahl eines um eine Achse drehbaren Drehelements bekannt, der eine Sensoranordnung mit einem einzigen, das Drehelement abtastenden Sensor und einer dem Sensor nachgeordneten Auswerteschaltung aufweist. Der Drehzahlmesser weist ein Energieerzeugungssystem auf, das derart ausgebildet ist, dass es die Sensoranordnung bei einer Drehbewegung oberhalb einer Minimaldrehzahl kontinuierlich mit Energie versorgt.

Bei den Umdrehungszählern des eingangs genannten Standes der Technik ist das Energieerzeugungssystem identisch mit der Sensoranordnung. Das Energieerzeugungssystem wird stets dann angesteuert, wenn das Drehelement relativ zur Sensoranordnung eine vorbestimmte Stellung erreicht. Zwischen diesen Stellungen ist keine Erfassung der Drehstellung möglich. Dies gilt auch dann, wenn die Sensoranordnung permanent mit elektrischer Energie versorgt wird. Ferner werden beim eingangs genannten Stand der Technik die Rohsignale nur kurzzeitig erzeugt. Es ist also nur das Erreichen der vorbestimmten Stellung detektierbar. Ob das Drehelement danach in dieser Drehstellung verharrt oder sich weiterbewegt, ist nicht erfassbar.

Die Vorgehensweise des eingangs genannten Standes der Technik weist eine Reihe von Nachteilen auf. Einer der wesentlichen Nachteile besteht darin, dass nur Veränderungen der Drehstellung erfassbar sind, nicht aber Drehstellungen als solche. Ein weiterer wesentlicher Nachteil besteht darin, dass bei schnelleren Drehbewegungen auf ein anderes Auswertungsverfahren umgeschaltet werden muss, weil das Energieerzeugungssystem, das mit der Sensoranordnung identisch ist, bei schnelleren Drehbewegungen nicht mehr zuverlässig arbeitet. Ferner ist beim eingangs genannten Stand der Technik entweder die Drehrichtung nur durch eine komplizierte Auswertung der zeitlichen Abfolge der bei Erreichen einer der vorbestimmten Stellungen erzeugten Rohsignale ermittelbar oder es ist ein komplexes System erforderlich, dessen Zuverlässigkeit im Dauerbetrieb Grenzen gesetzt sind.

Die Aufgabe der vorliegenden Erfindung besteht darin, einen Umdrehungszähler zu schaffen, bei dem auf einfachere Weise eine zuverlässige Ermittlung der Drehstellung und der Drehrichtung des Drehelements möglich ist.

Die Aufgabe wird dadurch gelöst,
- dass die Sensoranordnung einen einzigen das Drehelement abtastenden Sensor und eine dem Sensor nachgeordnete Auswertungsschaltung aufweist,
- dass in jeder Drehstellung des Drehelements anhand eines Rohsignals des Sensors eindeutig eine von mindestens drei Winkelbereichsgruppen ermittelbar ist,
- dass zwei Winkelbereichsgruppen je einen einzigen zusammenhängenden Winkelbereich und die anderen Winkelbereichsgruppen je zwei in sich zusammenhängende, voneinander getrennte Winkelbereiche aufweisen,
- dass anhand des erfassten Rohsignals die korrespondierende Winkelbereichsgruppe ermittelbar ist und
- dass das Energieerzeugungssystem und das Drehelement derart miteinander gekoppelt sind, dass für mindestens einen Teil der bei Abgabe der Energiepulse ermittelten Winkelbereichsgruppen ermittelbar ist, um welchen Winkelbereich das Drehelement verdreht ist.

Das Ermitteln der Winkelbereiche ist besonders einfach, wenn das Energieerzeugungssystem und das Drehelement derart miteinander gekoppelt sind, dass bei einer Drehzahl unterhalb der Minimaldrehzahl die Energiepulse abgegeben werden, während sich das Drehelement in einem von mehreren vorbekannten Pulswinkelbereichen befindet, und für die anderen Winkelbereichsgruppen durch Heranziehung der vorbekannten Pulswinkelbereiche ermittelbar ist, um welchen Winkelbereich das Drehelement verdreht ist.

Alternativ ist es möglich, dass der Winkelbereich für die anderen Winkelbereichsgruppen durch Heranziehung vorausgegangener und/oder nachfolgender ermittelter Winkelbereichsgruppen ermittelbar ist.

Mittels des erfindungsgemäßen Umdrehungszählers soll bei jeder Drehzahl, also insbesondere auch oberhalb der Minimaldrehzahl, auch ohne externe Energieversorgung eine korrekte Ermittlung der Umdrehungszahl möglich sein. Dies ist dadurch erreichbar,
- dass bei einer Drehbewegung oberhalb der Minimaldrehzahl die Sensoranordnung von dem Energieerzeugungssystem kontinuierlich mit Energie versorgbar ist,
- dass von der Sensoranordnung bei kontinuierlicher Versorgung mit Energie kontinuierlich die Rohsignale erfassbar und die korrespondierenden Winkelbereichsgruppen ermittelbar sind,
- dass auch für die bei kontinuierlicher Versorgung mit Energie ermittelten anderen Winkelbereichsgruppen ermittelbar ist, um welchen Winkelbereich das Drehelement verdreht ist, und
- dass anhand der bei kontinuierlicher Versorgung mit Energie ermittelbaren Winkelbereiche die Umdrehungszahl ermittelbar ist.

Die Ermittlung der Winkelbereiche ist besonders einfach, wenn ein Teil der mit einem Rohsignal korrespondierenden Winkelbereichsgruppen einen einzigen Winkelbereich aufweist.

Wenn die Sensoranordnung getaktet betreibbar ist, ist eine besonders energiesparende Betriebsweise des Umdrehungszählers möglich.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: ein Blockschaltbild eines Umdrehungszählers,
- FIG 2: ein Blockschaltbild eines Sensors mit einem Drehelement,
- FIG 3: ein Winkeldiagramm,
- FIG 4: ein Energieerzeugungssystem und
- FIG 5: ein weiteres Winkeldiagramm.

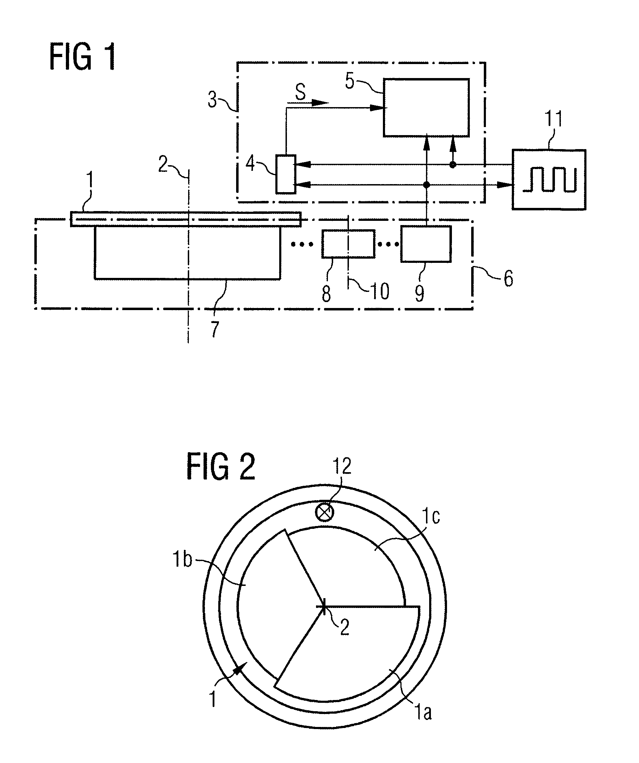

Gemäß FIG 1 weist ein Umdrehungszähler ein Drehelement 1 auf, das um eine Drehachse 2 drehbar ist. Der Umdrehungszähler weist ferner eine Sensoranordnung 3 auf, mittels derer eine Drehstellung des Drehelements 1 erfassbar ist. Aus der Abfolge der erfassten Drehstellungen ist dann eine Umdrehungszahl, das heißt die Anzahl der von dem Drehelement 1 ausgeführten Umdrehungen, ermittelbar. Gemäß FIG 1 weist die Sensoranordnung 3 dabei einen einzigen das Drehelement 1 abtastenden Sensor 4 und eine dem Sensor 4 nachgeordnete Auswerteschaltung 5 auf.

Der Umdrehungszähler weist gemäß FIG 1 ferner ein Energieerzeugungssystem 6 auf. Das Energieerzeugungssystem 6 besteht im wesentlichen aus einem Erregermagneten 7, einem Speichermagneten 8 und einer Spule 9 mit nachgeschalteter Gleichrichtungs- und Energiespeicherelektronik. Der Erregermagnet 7 ist drehfest mit dem Drehelement 1 verbunden. Der Speichermagnet 8 ist um eine Klappachse 10 drehbar.

Die Sensoranordnung 3 ist von dem Energieerzeugungssystem 6 mit elektrischer Energie versorgbar und so betreibbar. Zur Minimierung des Energiebedarfs der Sensoranordnung 3 weist der Umdrehungszähler einen Taktgeber 11 auf, mittels dessen die Sensoranordnung 3 getaktet betreibbar ist.

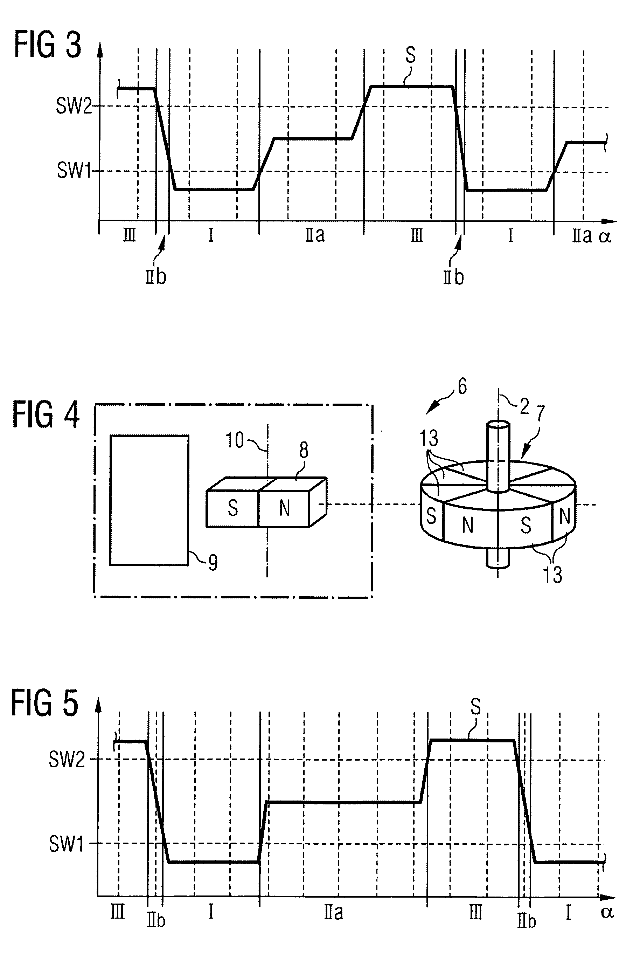

In Verbindung mit den FIG 2 und 3 wird nunmehr anhand des Beispiels eines optischen Sensors 4 das Prinzip der Signalauswertung erläutert.

Gemäß FIG 2 ist das Drehelement 1 als optische Blende ausgebildet. Es weist mindestens drei Blendenbereiche 1a, 1b, 1c auf. Der Bereich la schirmt das Licht einer gepulst betreibbaren Lichtquelle 12 vollständig vom Sensor 4 ab. Der Bereich 1c schirmt das Licht gar nicht vom Sensor 4 ab. Der Bereich 1b schirmt das Licht teilweise vom Sensor 4 ab. Die Lichtquelle 12 ist z. B. eine Laser- oder Leuchtdiode 12.

Ein Rohsignal S des Sensors 4 weist den in FIG 3 prinzipiell dargestellten Verlauf über einem Drehwinkel α auf. Aufgrund der endlichen Größe der Lichtquelle 12 und des Sensors 4 sind dabei Übergänge zwischen den Signalniveaus geringfügig verschliffen. Dennoch lässt sich das Rohsignal S durch Vergleich mit Schwellwerten SW1, SW2 relativ einfach auswerten.

Weist das Rohsignal S einen Pegel oberhalb des Schwellwerts SW2 auf, wird im wesentlichen der Blendenbereich 1c abgetastet. Dies entspricht dem Winkelbereich III. Liegt der Pegel unterhalb des Schwellwerts SW1, wird im wesentlichen der Blendenbereich 1a abgetastet. Liegt der Pegel zwischen den Schwellwerten SW1, SW2, wird entweder der Blendenbereich 1b abgetastet oder aber der Übergangsbereich vom Blendenbereich 1a zum Blendenbereich 1c.

Somit korrespondiert in jeder möglichen Drehstellung des Drehelements 1 das Rohsignal S des Sensors 4 mit einer Winkelbereichsgruppe I, II, III. Die Winkelbereichsgruppen I und III weisen dabei einen einzigen Winkelbereich I, III auf. Der Winkelbereich II weist zwei Winkelbereiche IIa, IIb auf, je nach dem, ob der Blendenbereich 1b abgetastet wurde (Winkelbereich IIa) oder ob der Übergangsbereich vom Blendenbereich 1a zum Blendenbereich 1c abgetastete wurde (Winkelbereich IIb).

Aufgrund des Umstands, dass die Winkelbereichsgruppen I, III nur einen einzigen Winkelbereich I, III aufweisen, ist bei Erfassung des korrespondierenden Rohsignalpegels direkt ermittelbar, um welchen Winkelbereich I, III das Drehelement 1 in diesem Fall verdreht ist. Beim Winkelbereich II ist dies aus dem Rohsignal S selbst nicht ohne weiteres ermittelbar. Wie dennoch ermittelbar ist, um welchen der Winkelbereiche IIa, IIb das Drehelement 1 verdreht ist, wird nachstehend erläutert.

Gemäß FIG 4 weist der Erregermagnet 7 eine Anzahl von Sektoren 13 auf. Die Mindestanzahl der Sektoren 13 beträgt sechs. Vorzugsweise beträgt die Anzahl sechs, acht, zehn oder zwölf.

Der Erregermagnet 7 wirkt auf den Speichermagneten 8. Bei langsamen Drehbewegungen, das heißt bei Drehbewegungen unterhalb einer Minimaldrehzahl, klappt der Speichermagnet 8 bei Erreichen vorbestimmter Pulswinkelbereiche impulsartig um. Dadurch wird in der Spule 9 zwangsweise ein Energiepuls induziert, der von der Spule 9 an die Sensoranordnung 3 abgegeben wird. Die Sensoranordnung 3 (einschließlich der Lichtquelle 12) ist somit kurzzeitig betreibbar. Es ist also aufgrund des Energiepulses mindestens ein Rohsignal S erfassbar und die korrespondierende Winkelbereichsgruppe I, II, III ermittelbar.

Der Erregermagnet 7 ist mit dem Drehelement 1 drehfest verbunden. Der Erregermagnet 7 kann aber bezüglich des Drehelements 1 um einen Winkel verdreht sein. Es ist daher möglich, die Pulswinkelbereiche derart relativ zum Drehelement 1 zu legen, dass das Umklappen des Speichermagneten 8 erfolgt, während das Drehelement 1 sich keinesfalls im Winkelbereich IIb befinden kann. In diese Fall ist also durch Heranziehen der vorbekannten Pulswinkelbereiche (in FIG 3 durch senkrechte gestrichelte Linien angedeutet) auch bei einem Rohsignal S zwischen den Schwellwerten SW1, SW2 eindeutig ermittelbar, dass das Drehelement 1 um den Winkelbereich IIa verdreht ist.

Denn konstruktionsbedingt können keine Energiepulse generiert werden, während sich das Drehelement 1 im Winkelbereich IIb befindet. In diesem Fall besteht die geeignete Kopplung zwischen dem Energieerzeugungssystem 6 und dem Drehelement 1 also darin, dass der Erregermagnet 7 um einen geeigneten Versatzwinkel gegenüber dem Drehelement 1 verdreht ist und die Pulswinkelbereiche, in denen Energiepulse auftreten können, vorbekannt sind.

Bei der oben stehend beschriebenen Ausführungsform ist also nicht nur für einen Teil, sondern für alle der bei Abgabe der Energiepulse ermittelten Winkelbereichsgruppen I bis III ermittelbar, um welchen Winkelbereich I, IIa, III das Drehelement 1 verdreht ist. Aus der Abfolge der ermittelten Winkelbereiche I, IIa, III kann dann in einfacher Weise die Anzahl der vom Drehelement 1 ausgeführten Umdrehungen ermittelt werden.

Aber auch, falls nicht mit Sicherheit ausgeschlossen werden kann, dass das Rohsignal S zu einem Zeitpunkt erfasst wird, zu dem der Übergangsbereich zwischen den Blendenbereichen 1a und 1c abgetastet wird, das Drehelement 1 also um den Winkelbereich IIb verdreht ist, ist es bei geeigneter Ausgestaltung des Umdrehungszählers möglich, eindeutig zu ermitteln, ob ein Rohsignal S, das mit der Winkelbereichsgruppe II korrespondiert, dem Winkelbereich IIa oder dem Winkelbereich IIb zuzuordnen ist. Dies wird nachstehend in Verbindung mit FIG 5 näher erläutert.

Gemäß FIG 5 werden bei einer vollständigen Umdrehung des Drehelements 1 mindestens zehn Energiepulse erzeugt. Dies ist in FIG 5 wieder durch die senkrechten gestrichelten Linien angedeutet. Im Winkelbereich I liegen dabei mindestens zwei Pulswinkelbereiche, im Winkelbereich III ebenfalls. Im Winkelbereich IIa liegen mindestens vier, gemäß FIG 5 sogar fünf Pulswinkelbereiche. Im Winkelbereich IIb liegt nur ein einziger Pulswinkelbereich.

Das Vorsehen von jeweils mindestens zwei Pulswinkelbereichen in den Winkelbereichen I und III hat dabei den Zweck, zu gewährleisten, dass diese Winkelbereiche I, III pro Umdrehung auch dann mit Sicherheit mindestens einmal erfasst werden, wenn - egal aus welchem Grund - eine einzelne Abtastung unterbleiben sollte. Aus dem gleichen Grund liegen im Winkelbereich IIa fünf Pulswinkelbereiche, so dass im Pulswinkelbereich IIa pro Umdrehung bis zu fünf, auch im ungünstigsten Fall aber mindestens zwei Abtastungen erfolgen. Im Winkelbereich IIb hingegen kann pro Umdrehung nur eine einzige Abtastung erfolgen.

Mit dieser Anordnung lässt sich auf einfache Weise auch für die Winkelbereichsgruppe II durch Heranziehung vorausgegangener und/oder nachfolgender ermittelter Winkelbereichsgruppen ermitteln, um welchen Winkelbereich IIa bzw. IIb das Drehelement 1 verdreht ist. Von Bedeutung sind dabei nur diejenigen Erfassungen der Winkelbereichsgruppe II, bei denen die Reihenfolge I-II-III bzw. III-III-I erfolgt. Alle anderen Übergänge sind unkritisch.

Wenn die ermittelten Winkelbereichsgruppen I, II, III die Reihenfolge I-II-III aufweisen, die Winkelbereichsgruppe II also nur ein einziges Mal ermittelt wurde, wurde der Winkelbereich IIb durchlaufen. Ansonsten, also wenn bei einem Übergang von der Winkelbereichsgruppe I zur Winkelbereichsgruppe III die Winkelbereichsgruppe II mehrfach erfasst wurde, wurde der Winkelbereich IIa durchlaufen. Im Ergebnis kann also stets auf Durchlaufen des Winkelbereichs IIa erkannt werden, sowie die Winkelbereichsgruppe II mindestens zweimal unmittelbar hintereinander ermittelt wird. Die Ermittlung der Umdrehungszahl erfolgt dann wieder wie bei der Ausführungsform gemäß FIG 3.

Das oben stehend beschriebene Verfahren zum Versorgen der Sensoranordnung 3 mit Energie ist unterhalb einer Minimaldrehzahl (und sicherheitshalber auch noch ein Stück oberhalb der Minimaldrehzahl) mit Sicherheit gewährleistet. Mit Erreichen der Minimaldrehzahl und darüber hinaus wird aber auch ohne Umklappen des Speichermagneten 8 durch das dann kontinuierliche Rotieren des Erregermagneten 7 in der Spule 9 eine hinreichend hohe elektrische Energie induziert, so dass die Sensoranordnung in diesem Fall von dem Energieerzeugungssystem 6 kontinuierlich mit Energie versorgbar ist. Die Sensoranordnung 1 kann somit aufgrund der kontinuierlichen Versorgung mit Energie auch die Rohsignale S kontinuierlich erfassen und die korrespondierenden Winkelbereichsgruppen I, II, III ermitteln.

Für die Winkelbereichsgruppen I, III, die nur einen einzigen Winkelbereich I, III aufweisen, ist dabei selbstverständlich wieder die Ermittlung des jeweiligen Winkelbereichs I, III möglich. Auch für die Winkelbereichsgruppe II ist aber möglich, aus der Abfolge der ermittelten Winkelbereichsgruppen I, II, III auf den jeweiligen Winkelbereich IIa, IIb zu schließen. Denn insbesondere dreht sich das Drehelement 1 in diesem Fall voraussetzungsgemäß mit einer Drehzahl oberhalb der Minimaldrehzahl. Aufgrund der begrenzten Abtastrate des Sensors 4 und der geringen Breite des Winkelbereichs IIb wird pro Umdrehung der Winkelbereich IIb erheblich seltener abgetastet als der Winkelbereich IIa. Die Drehzahl ist aber nicht beliebig schnell veränderbar.

Beispielsweise kann daher in diesem Fall auf Durchlaufen des Winkelbereichs IIa geschlossen werden, wenn die Anzahl zusammenhängend ermittelter Winkelbereichsgruppen II größer als die Zahl der ermittelten Winkelbereichsgruppen I, III unmittelbar zuvor bzw. unmittelbar danach ist. Anderenfalls, also wenn die Anzahl der zusammenhängenden Winkelbereichsgruppen II kleiner als die Zahl der unmittelbar vor bzw. unmittelbar danach ermittelten Winkelbereichsgruppen I, III ist, kann auf Durchlaufen des Winkelbereichs IIb erkannt werden. Auch andere Auswertungsverfahren, z. B. anhand der absoluten Länge der zusammenhängend ermittelten Winkelbereichsgruppen II sind denkbar. Die Umdrehungszahl ergibt sich wieder aus der Abfolge der ermittelten Winkelbereiche I, IIa, IIb, III.

Gemäß dem oben stehend beschriebenen Ausführungsbeispiel ist bereits das Rohsignal S des Sensors 4 aufgrund der Ausgestaltung der Blendenbereiche 1a, 1b, 1c vorgequantelt bzw. digitalisiert. Es ist aber auch möglich, dass das Rohsignal S des Sensors 4 während einer Umdrehung des Drehelements 1 in den Winkelbereichen I, IIa, III stetig ansteigt und dann im Winkelbereich IIb abrupt wieder abfällt. Auch ist der Sensor 4 nicht notwendigerweise ein optischer Sensor. Er kann ebenso als kapazitiver oder magnetosensitiver Sensor, als Dehnungsmessstreifen oder als auf dem Transformationsprinzip beruhendes Spulensystem ausgebildet sein. Ferner ist - durch Vergleich mit mehr als zwei Schwellwerten SW1, SW2 - auch eine Unterscheidung von mehr als drei Winkelbereichsgruppen I, II, III möglich.

## Patentansprüche

1. Umdrehungszähler zum Ermitteln einer Umdrehungszahl eines um eine Drehachse (2) drehbaren Drehelements (1), mit einer Sensoranordnung (3) und einem Energieerzeugungssystem (6),
- wobei die Sensoranordnung (3) einen einzigen das Drehelement (1) abtastenden Sensor (4) und eine dem Sensor (4) nachgeordnete Auswerteschaltung (5) aufweist,
- wobei in jeder Drehstellung des Drehelements (1) anhand eines Rohsignals (S) des Sensors (4) eindeutig eine von mindestens drei Winkelbereichsgruppen (I, II, III) ermittelbar ist,
- wobei zwei Winkelbereichsgruppen (I, III) je einen einzigen zusammenhängenden Winkelbereich (I, III) und die anderen Winkelbereichsgruppen (II) je zwei in sich zusammenhängende, voneinander getrennte Winkelbereiche (IIa, IIb) aufweisen,
- wobei das Energieerzeugungssystem (6) derart ausgebildet ist, dass bei einer Drehbewegung unterhalb einer Minimaldrehzahl von ihm zwangsweise Energiepulse an die Sensoranordnung (3) abgegeben werden,
- wobei bei Abgabe der Energiepulse von der Sensoranordnung (3) jeweils mindestens ein Rohsignal (S) erfassbar und die korrespondierende Winkelbereichsgruppe (I, II, III) ermittelbar ist,
- wobei das Energieerzeugungssystem (6) und das Drehelement (1) derart miteinander gekoppelt sind, dass für mindestens einen Teil der bei Abgabe der Energiepulse ermittelten Winkelbereichsgruppen (I, II, III) ermittelbar ist, um welchen Winkelbereich (I, IIa, IIb, III) das Drehelement (1) verdreht ist, und anhand der ermittelbaren Winkelbereiche (I, IIa, IIb, III) die Umdrehungszahl ermittelbar ist.

2. Umdrehungszähler nach Anspruch 1, **dadurch gekennzeichnet, dass** das Energieerzeugungssystem (6) und das Drehelement (1) derart miteinander gekoppelt sind, dass bei einer Drehzahl unterhalb der Minimaldrehzahl die Energiepulse abgegeben werden, während sich das Drehelement (1) in einem von mehreren vorbekannten Pulswinkelbereichen befindet, und dass für die anderen Winkelbereichsgruppen (II) durch Heranziehung der vorbekannten Pulswinkelbereiche ermittelbar ist, um welchen Winkelbereich (IIa) das Drehelement (1) verdreht ist.

3. Umdrehungszähler nach Anspruch 1 oder 2, **dadurch gekennzeichnet, dass** für die anderen Winkelbereichsgruppen (II) der Winkelbereich (IIa, IIb) durch Heranziehung vorausgegangener und/oder nachfolgender ermittelter Winkelbereichsgruppen (I, II, III) ermittelbar ist.

4. Umdrehungszähler nach Anspruch 1, 2 oder 3, **dadurch gekennzeichnet,**
- **dass** bei einer Drehbewegung oberhalb der Minimaldrehzahl die Sensoranordnung (3) von dem Energieerzeugungssystem (6) kontinuierlich mit Energie versorgbar ist,
- **dass** von der Sensoranordnung (3) bei kontinuierlicher Versorgung mit Energie kontinuierlich die Rohsignale (S) erfassbar und die korrespondierenden Winkelbereichsgruppen (I, II, III) ermittelbar sind,
- **dass** auch für die bei kontinuierlicher Versorgung mit Energie ermittelten anderen Winkelbereichsgruppen (II) ermittelbar ist, um welchen Winkelbereich (IIa, IIb) das Drehelement (1) verdreht ist, und
- **dass** anhand der bei kontinuierlicher Versorgung mit Energie ermittelbaren Winkelbereiche (I, IIa, IIb, III) die Umdrehungszahl ermittelbar ist.

5. Umdrehungszähler nach einem der obigen Ansprüche, **dadurch gekennzeichnet, dass** die Sensoranordnung (3) getaktet betreibbar ist.
